# FASCICULE DE BREVET EUROPEEN

(11) **EP 2 457 761 B1**
(45) Date de publication et mention de la délivrance du brevet: **10.07.2013**
(21) Numéro de dépôt: 11191412.3
(22) Date de dépôt: 30.11.2011
(51) Int. Cl.: B60K 11/08

(54) **Dispositif de régulation d'un flux d'air**
Vorrichtung zur Regulierung eines Luftstroms
Device for regulating a air stream

(30) Priorité: 30.11.2010 FR 1059940
(43) Date de publication de la demande: 30.05.2012
(73) Titulaire: Compagnie Plastic Omnium, 69007 Lyon (FR)
(72) Inventeur: Gilotte, Philippe, 01470 Benonces (FR); Gille, Denis, 39370 La Pesse (FR)
(74) Mandataire: Descazeaux, Charles

(56) Documents cités:
- WO-A2-2007/130847
- DE-A1-102004 048 038
- FR-A1- 2 825 326
- US-A1- 2009 243 319

## Description

La présente invention concerne un dispositif de régulation d'un flux d'air.

Elle s'applique en particulier à un dispositif de régulation d'un flux d'air monté à l'avant d'un véhicule automobile. Elle s'applique également à un dispositif de régulation d'un flux d'air à l'arrière du véhicule. Le document DE 10 2004 048 038 décrit un dispositif selon le préambule de la revendication 1.

On connaît déjà dans l'état de la technique, notamment de FR 2 825 326, un dispositif de régulation. Le dispositif comporte plusieurs volets d'obturation de l'ouverture. Chaque volet est muni de deux extrémités montées articulées chacune autour d'un axe. Le dispositif comprend également des moyens d'actionnement de la rotation et de la déformation du volet, entre une position de dégagement de l'ouverture, dans laquelle le volet est de forme générale plane et une position d'obturation de l'ouverture, dans laquelle le volet est de forme générale galbée.

Les moyens d'actionnement sont agencés de sorte que la rotation des volets entraîne la déformation du volet, un jeu fonctionnel permettant le rapprochement des extrémités de chaque volet. Ainsi, il est nécessaire de faire pivoter chaque volet afin de les déformer. Autrement dit, il n'est pas possible de déformer chaque volet sans le faire pivoter. A cet effet, les moyens d'actionnement du dispositif de l'état de la technique comprennent des biellettes et des arceaux d'articulation de chaque volet, fixés à proximité du milieu du volet correspondant. Ainsi, le dispositif de l'état de la technique est relativement complexe.

En outre, ces moyens d'actionnement sont positionnés dans le flux d'air circulant à travers l'ouverture. Le flux d'air est donc réduit par la présence des moyens d'actionnement.

L'invention a pour but de fournir un dispositif de régulation d'un flux d'air comprenant un volet déformable plus performant et plus simple.

L'invention a donc pour objet un dispositif de régulation d'un flux d'air selon la revendication 1.

Le dispositif selon l'invention est simple à mettre en oeuvre. En effet, en appliquant la force de déplacement directement sur au moins une des extrémités du volet, le dispositif selon l'invention ne nécessite pas moyens d'actionnement complexes permettant de transformer un mouvement de rotation en déformation du volet comme c'est le cas dans le dispositif de l'état de la technique. En outre, la simplicité des moyens d'actionnement du dispositif selon l'invention réduit les risques de dysfonctionnement.

Les moyens d'actionnement du dispositif selon l'invention agissent directement sur chaque extrémité déplacée du volet de façon à le faire flamber alors que les moyens d'actionnement du dispositif de l'état de la technique agissent au milieu du volet de façon à le déformer en appliquant une pression directement sur le volet selon la direction longitudinale du véhicule.

Le volet du dispositif selon l'invention est suffisamment souple pour permettre un flambage et éviter l'utilisation de moyens d'actionnement sur-dimensionnés. En outre, le volet est suffisamment rigide pour éviter qu'il se déforme sous son propre poids ou sous l'action d'un flux d'air. En outre, le volet est suffisamment rigide pour permettre une déformation élastique et donc un effet ressort du volet entre ses positions plane et galbée. Dans le cadre de la présente demande, la forme dite plane s'entend d'une forme peu ou pas galbée, tandis que la forme dite galbée s'entend d'une forme plus galbée que la forme dite plane. Par exemple, le passage d'une forme peu galbée à une forme plus galbée entre bien évidemment dans le cadre de la présente invention.

De préférence, le volet est pré-déformé. Cette pré-déformation permet de s'assurer du sens du flambage du volet.

Contrairement au dispositif de l'état de la technique dans lequel la rotation est le mouvement moteur nécessaire pour déformer la pièce, le déplacement d'une extrémité du volet du dispositif selon l'invention est le mouvement moteur permettant de déformer le volet.

Les moyens d'actionnement du dispositif selon l'invention agissant sur au moins une extrémité du volet, il est possible de disposer ces moyens d'actionnement sur les côtés de l'ouverture et donc de les protéger du gel, de l'encrassement et des chocs de faible intensité, par exemple des chocs dits « parking ». En outre, en disposant les moyens d'actionnement hors du passage du flux d'air, ce dernier n'est pas réduit par la présence des moyens d'actionnement dans le passage contrairement au dispositif de l'état de la technique.

Dans un mode de réalisation, le rapprochement de chaque extrémité déplacée par rapport à l'autre entraîne la déformation du volet depuis sa forme plane dans sa forme galbée et l'éloignement de chaque extrémité déplacée par rapport à l'autre entraîne la déformation du volet depuis sa forme galbée dans sa forme plane.

Selon des caractéristiques optionnelles d'un mode de réalisation du dispositif:
- Le flux d'air circule à travers une ouverture ménagée dans une pièce de carrosserie d'un véhicule automobile.
- La première position correspond à une position de dégagement de l'ouverture et la deuxième position correspond à une position d'obturation de l'ouverture.

Le dispositif permet de réguler le flux d'air au travers de l'ouverture. Grâce au flambage du volet, il est possible d'obturer complètement l'ouverture lorsqu'elle est ménagée dans une pièce galbée en plaquant le volet galbé contre la pièce de carrosserie galbée.

Dans un autre mode de réalisation, le volet forme un déflecteur ou un spoiler.

De façon optionnelle, chaque extrémité étant montée articulée autour d'un axe commun, le volet est mobile en rotation autour de l'axe commun.

Dans un mode de réalisation, les axes de rotation du volet sont positionnés au voisinage d'un bord supérieur de l'ouverture sur le bord supérieur du volet. Ainsi, les axes de rotation peuvent être dissimulés par la pièce de carrosserie. En outre, le volet peut pivoter sous son propre poids depuis la position de dégagement vers la position d'obturation. Enfin, lorsque l'ouverture est positionnée en regard d'un ventilateur de refroidissement, la rotation du volet dans la position de dégagement est favorisée par la pression dynamique de l'air lorsque le véhicule roule et par la dépression engendrée par le ventilateur.

Dans un autre mode de réalisation, les axes de rotation du volet sont positionnés au voisinage d'un bord inférieur de l'ouverture sur le bord inférieur du volet. Ainsi, le volet peut pivoter sous son propre poids depuis la position d'obturation vers la position de dégagement.

Dans encore un autre mode de réalisation, les axes de rotation du volet sont positionnés à une hauteur intermédiaire de l'ouverture comprise entre les bords inférieur et supérieur de l'ouverture sur le bord supérieur du volet. Ce mode de réalisation permet de conserver une ouverture dégagée en permanence.

Dans un autre mode de réalisation, les axes de rotation du volet sont positionnés à une hauteur intermédiaire de l'ouverture comprise entre les bords inférieur et supérieur de l'ouverture à une hauteur intermédiaire du volet. On réduit ainsi le porte à faux du volet dans la position de dégagement.

De préférence, le dispositif comprend un unique volet. Contrairement à un dispositif comprenant plusieurs volets dans lequel certains volets en position de dégagement obstruent une partie de l'ouverture, un dispositif comprenant un unique volet permet de libérer entièrement l'ouverture lorsque le volet est dans la position de dégagement.

Dans un mode de réalisation, le dispositif comprend des moyens de couplage entre le déplacement de chaque extrémité déplacée et la rotation du volet agencés de sorte que le déplacement de chaque extrémité déplacée entraîne la rotation du volet.

Ainsi, le déplacement en translation des extrémités est moteur. Le rapprochement des extrémités entraîne, d'une part, la déformation du volet et, d'autre part, la rotation du volet.

Dans une variante, les moyens d'actionnement comprennent des moyens de poussée de chaque extrémité déplacée vers l'autre extrémité le long de l'axe commun.

Dans une autre variante, les moyens d'actionnement comprennent des moyens de traction de chaque extrémité déplacée vers l'autre extrémité le long de l'axe commun.

Dans ces deux variantes, les moyens d'actionnement sont de type linéaire.

Selon l'invention, les moyens de couplage entre le déplacement de chaque extrémité déplacée et la rotation du volet sont agencés de sorte que le déplacement en rotation du volet entraine le déplacement, notamment le déplacement en translation de chaque extrémité déplacée.

Ainsi, le déplacement en rotation du volet est moteur. La rotation entraine, d'une part, le rapprochement des extrémités l'une de l'autre et, d'autre part la déformation du volet.

De façon optionnelle, les moyens de couplage comprennent un palier de guidage hélicoïdal de chaque extrémité déplacée du volet.

Ainsi, on peut simplement induire une rotation du volet sous l'effet du déplacement d'au moins une des extrémités ou bien induire le déplacement d'au moins une des extrémités sous l'effet d'une rotation du volet.

Par exemple, les moyens d'actionnement comprennent au moins une fibre électro-active. Sous l'effet d'une tension électrique, les fibres électro-actives se contractent ce qui entraine une traction sur chaque extrémité et donc un rapprochement des extrémités l'une de l'autre.

L'invention sera mieux comprise à la lecture de la description qui va suivre, donnée uniquement à titre d'exemple et faite en se référant aux dessins annexés, sur lesquels :
- la figure 1 est une vue en perspective de derrière d'une peau de pare-chocs de véhicule automobile et d'un dispositif de régulation selon un premier mode de réalisation de l'invention en configuration d'obturation de l'ouverture de passage du flux d'air;
- la figure 2 est une vue analogue à celle de la figure 1 sur laquelle le dispositif de régulation est en configuration de dégagement l'ouverture de passage du flux d'air ;
- la figure 3 est une vue de détails de devant d'une extrémité du dispositif de régulation de la figure 1;
- la figure 4 est une vue analogue à celle de la figure 3 d'une extrémité du dispositif de régulation de la figure 2.

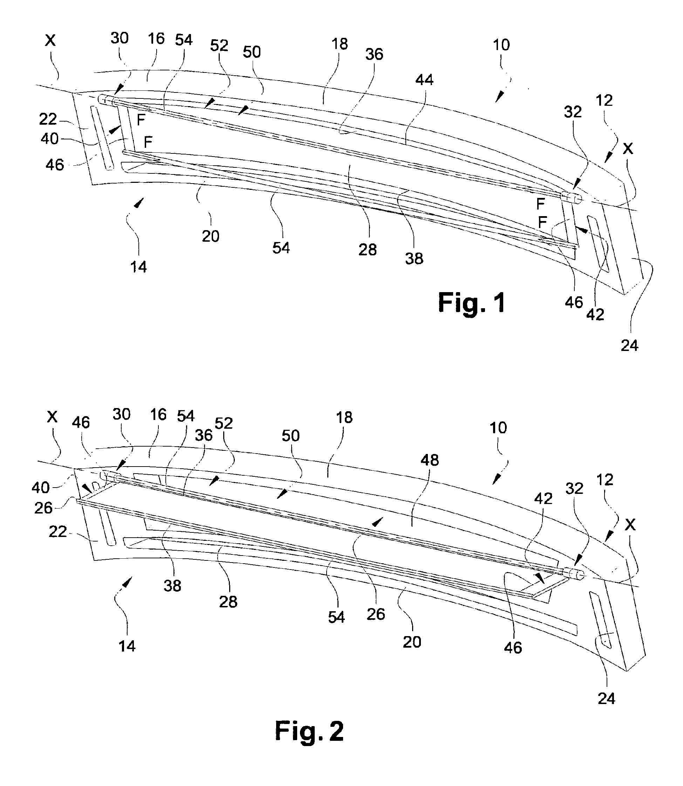

On a représenté, sur les figures 1 à 4, une pièce de carrosserie d'un véhicule automobile désignée par la référence générale 10, en l'espèce un pare-chocs.

Cette pièce 10 comporte une pièce de style, telle qu'une peau de pare-chocs 12. Comme illustrée sur les figures, la peau de pare-chocs 12 présente une forme générale galbée.

On a également représenté sur ces figures un dispositif de régulation 14 selon un premier mode de réalisation comportant un cadre 16 comprenant une barre transversale supérieure 18, une barre transversale inférieure 20, une première barre latérale 22 et une seconde barre latérale 24. Le cadre 16 délimite une ouverture 26, ménagée dans la peau de pare-chocs 12, qui permet la circulation d'un flux d'air. L'ouverture présente une dimension selon la direction verticale du véhicule comprise entre 100 et 400 mm et une dimension selon la direction transversale du véhicule comprise entre 300 et 900 mm. En outre, le dispositif de régulation 14 comporte un volet d'obturation 28 déformable.

Le volet d'obturation 28 comporte des première et deuxième extrémités transversales 30, 32 montées articulées autour d'un axe géométrique commun X lié aux premier et deuxième barres latérales 22, 24. Le volet 28 comprend également des bords longitudinaux inférieur et supérieur 36, 38. Chaque extrémité transversale 30, 32 comprend respectivement un bord transversal 40, 42. Le volet 28 est pré-déformé afin de faciliter son flambage selon la direction longitudinale du véhicule.

Les deux extrémités 30, 32 pivotent autour de l'axe X de sorte que le volet est mobile en rotation autour de l'axe X.

Les extrémités 30, 32 sont mobiles en translation l'une par rapport à l'autre le long de l'axe X. Dans l'exemple décrit, chaque extrémité 30, 32 est mobile en translation le long de l'axe géométrique commun X par rapport à la peau de pare-chocs 12. En variante, une des extrémités 30, 32 est fixe par rapport à la peau de pare-chocs 12 et l'autre est mobile par rapport à la peau de pare-chocs 12.

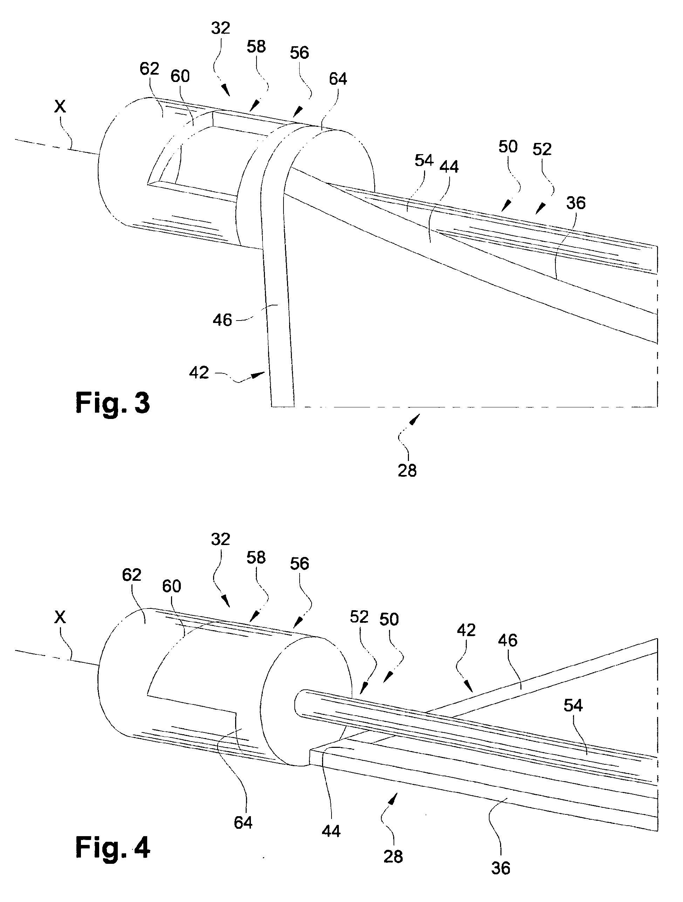

Sur les figures 1 et 3, le dispositif de régulation 14 est représenté en position d'obturation de l'ouverture 26. Dans cette position d'obturation, le volet 28 est de forme générale galbée épousant la forme générale galbée de la peau de pare-chocs 12 et ses deux extrémités 30, 32 sont les plus rapprochées l'une de l'autre.

Pour que le galbe épouse la peau de pare-chocs 12, le volet 28 est muni d'une lame ressort pré-cintrée 44, fixée par exemple sur son bord longitudinal supérieur 36. Pour que le galbe soit uniforme sur toute la hauteur du volet 28, ce dernier est muni de bandes de rigidification 46, fixées par exemple sur ses bords transversaux 40, 42 par collage, clipsage, vissage, etc. En variante, les bords transversaux 40, 42 sont venus de matière avec le reste du volet et présentent une épaisseur supérieure à l'épaisseur du reste du volet 28. Dans une autre variante, les bords transversaux 40,42 comprennent une bande rigide, par exemple métallique, surmoulée dans le volet.

Sur les figures 2 et 4, le dispositif de régulation 14 est représenté en position de dégagement de l'ouverture 26. Dans cette position, le volet 28 est de forme générale plane et ses deux extrémités 30, 32 sont les plus éloignées l'une de l'autre. Comme visible sur la figure 2, le dispositif 14 présente un espace 48 entre le bord longitudinal supérieur 36 du volet 28 et la barre transversale supérieure 18.

Entre les positions de dégagement et d'obturation, le flambage du volet 28 selon la direction longitudinale du véhicule est compris entre 3 et 15 mm.

Le dispositif de régulation 14 comprend également des moyens 50 d'actionnement du déplacement des extrémités 30, 32 du volet 28 l'une par rapport à l'autre. Les moyens 50 génèrent une force F de déplacement des extrémités 30, 32 l'une par rapport à l'autre. Les moyens 50 sont agencés de sorte que la force est appliquée sur au moins une des extrémités 30, 32, ici sur chaque extrémité 30, 32. Ces moyens d'actionnement 50 comprennent des moyens 52 de traction des extrémités 30, 32 l'une vers l'autre le long de l'axe X. Les moyens de traction 52 comprennent ici deux fibres polymères électro-actives 54 reliant les deux bords transversaux 40, 42 opposés du volet 28. En l'espèce, les fibres électro-actives 54 relient les deux extrémités 30, 32 du volet 28 et sont disposées transversalement entre les deux bords transversaux 40, 42. En variante, les fibres 54 sont disposées en croisillon. Dans une autre variante, les fibres 54 sont disposées verticalement entre les deux barres transversales 18, 20.

Dans l'exemple décrit, le dispositif 14 comprend deux fibres 54 permettant une déformation parfaitement symétrique du volet 28 par rapport à un plan horizontal médian du volet 28. En variante, le dispositif 14 comprend une seule fibre 54. Cette variante présente un coût plus faible par rapport à la variante à deux fibres. Dans tous les cas, les moyens 50 sont agencés de sorte que le déplacement des extrémités 30, 32 l'une par rapport à l'autre entraîne la déformation du volet 28 entre sa forme plane et sa forme galbée.

Le dispositif de régulation 14 comprend de plus des moyens 56 de couplage entre le déplacement en translation de chaque extrémité 30, 32 et la rotation du volet 28. A chaque extrémité 30, 32, les moyens de couplage 56 comprennent un palier 58 de guidage de chaque extrémité 30, 32 comprenant une rampe hélicoïdale 60. Chaque palier 58 comprend une partie 62 fixe par rapport à la peau de pare-chocs 12 et une partie 64 mobile en translation et en rotation autour de l'axe X par rapport à la peau de pare-chocs 12. La partie 62 est solidaire de la peau de pare-chocs 12 alors que la partie 64 est solidaire du volet 28, ici de la bande 46 correspondante. Ainsi, les moyens de couplage 56 sont agencés de sorte que le déplacement en translation de chaque extrémité 30, 32 entraine la rotation du volet 28. Plus particulièrement, les moyens de couplage 56 sont agencés de sorte que l'éloignement des extrémités 30, 32 l'une par rapport à l'autre entraine la rotation du volet 28 depuis sa forme galbée dans sa forme plane. Les moyens de couplage 56 sont également agencés de sorte que le rapprochement des extrémités 30, 32 l'une par rapport à l'autre entraine la rotation du volet 28 depuis sa forme plane dans sa forme galbée.

Le fonctionnement du dispositif de régulation 14 va maintenant être décrit.

Pour déplacer le volet 28 depuis sa position de dégagement dans sa position d'obturation, on met sous tension chaque fibre 54 ce qui entraine le déplacement en translation de chaque extrémité 30, 32 l'une vers l'autre sensiblement selon l'axe commun X. Ce rapprochement des extrémités 30, 32 l'une de l'autre entraine le flambage du volet 28. Sous l'effet conjugué des moyens de couplage 56 et du poids du volet 28, le volet 28 pivote autour de l'axe commun X et se déplace en position d'obturation de l'ouverture 26.

Pour déplacer le volet 28 depuis sa position d'obturation dans sa position de dégagement, on relâche la tension de chaque fibre 54 ce qui entraine le déplacement en translation de chaque extrémité 30, 32 l'une à l'opposée de l'autre sensiblement selon l'axe commun X. Cet écartement ou éloignement des extrémités 30, 32 l'une de l'autre entraine le retour du volet 28 dans sa forme plane. Sous l'effet des moyens de couplage 56, le volet 28 pivote autour de l'axe commun X et se déplace en position de dégagement de l'ouverture 26.

Dans un deuxième mode de réalisation non illustré, les moyens d'actionnement comprennent un matériau à mémoire de forme dans lequel est réalisé le volet.

Dans un troisième mode de réalisation non illustré, les moyens d'actionnement comprennent des moyens de poussée des extrémités l'une vers l'autre le long de l'axe commun X.

De façon analogue aux premier et deuxième modes de réalisation, les moyens de couplage 56 sont agencés de sorte que le déplacement en translation de chaque extrémité déplacée 30, 32 entraine la rotation du volet. Ainsi, les moyens de poussée comprennent des actionneurs linéaires de type classique tels que des moteurs électriques à sortie linéaire, des électro-aimants ou des vérins, par exemple des vérins hydro-pneumatiques. Par exemple, le dispositif comprend deux actionneurs linéaires de chaque extrémité mobile par rapport à la peau de pare-chocs. En variante, le dispositif comprend un seul actionneur linéaire d'une seule extrémité mobile par rapport à la peau de pare-chocs, l'autre extrémité étant fixe par rapport à la peau de pare-chocs.

Dans un quatrième mode de réalisation non illustré, les moyens de couplage 56 sont, à la différence des premier, deuxième et troisième modes de réalisation, agencés de sorte que le déplacement en rotation du volet 28 entraine la translation de chaque extrémité déplacée 30, 32. Ainsi, les moyens d'actionnement 50 comprennent des moyens de mise en rotation du volet autour de l'axe commun. Les moyens de mise en rotation comprennent des actionneurs en rotation de type classique tels que des moteurs électriques à action directe sur l'axe X ou bien à action indirecte sur le volet par l'intermédiaire d'une came de renvoi d'un déplacement linéaire sensiblement perpendiculaire à l'axe.

Plus particulièrement, les moyens de couplage 56 du dispositif selon le quatrième mode de réalisation sont agencés de sorte que la rotation du volet 28 depuis sa forme galbée dans sa forme plane entraîne l'éloignement des extrémités 30, 32 l'une par rapport à l'autre et de sorte que la rotation du volet 28 depuis sa forme plane dans sa forme galbée entraîne le rapprochement des extrémités 30, 32 l'une par rapport à l'autre.

Dans un cinquième mode de réalisation non illustré et à la différence des précédents modes de réalisation, le dispositif permet la régulation d'un flux d'air circulant autour du véhicule automobile. En l'espèce, le dispositif permet la régulation d'un flux d'air à l'arrière d'un véhicule automobile. Le volet du dispositif forme un spoiler arrière destiné à être fixé sur une partie arrière du toit du véhicule ou une partie supérieure de l'ouvrant du véhicule. Le volet du dispositif selon le cinquième mode de réalisation n'est pas mobile en rotation. Ainsi, le dispositif ne comprend pas de moyens de couplage entre le déplacement en translation des extrémités et la rotation du volet. Comme dans le premier mode de réalisation, les moyens d'actionnement comprennent des fibres électro-actives. En variante, le volet du dispositif forme un déflecteur du véhicule automobile.

L'invention ne se limite pas aux modes de réalisation décrits précédemment.

En variante, le dispositif pourra comprendre plusieurs volets. Dans le cas où le dispositif régule un flux d'air circulant à travers une ouverture, les volets sont répartis sur toute la hauteur de l'ouverture de façon à obturer tout ou partie de l'ouverture lorsqu'ils sont en position d'obturation.

En outre, on pourra combiner dans un même dispositif des moyens de traction et de poussée d'au moins une des extrémités vers l'autre.

La pièce dans laquelle est ménagée l'ouverture à obturer pourra être une pièce différente d'une grille d'entrée d'air située dans la peau de pare-chocs. Par exemple, l'ouverture pourra être ménagée dans un écran sous moteur ou un passage de roue.

En outre, le dispositif selon l'invention pourra aussi être monté par exemple une pièce de renfort ou de structure telle qu'une face avant technique ou sur une buse d'écoulement d'air ou sur une pièce de carrosserie extérieure comme un déflecteur ou un spoiler afin de modifier localement l'écoulement d'air extérieur.

Le spoiler ou déflecteur pourra être positionné à l'avant ou à l'arrière du véhicule.

Les différents moyens d'actionnement et leurs variantes décrits dans le cadre des premier, deuxième, troisième et quatrième modes de réalisation pourront être utilisés dans le cinquième mode de réalisation.

## Revendications

1. Dispositif (14) de régulation d'un flux d'air, le dispositif comprenant:
- au moins un volet (28) muni de deux extrémités (30, 32) mobiles l'une par rapport à l'autre, le volet (28) étant déformable entre une première position dans laquelle le volet (28) est de forme générale plane, et dans laquelle ses deux extrémités (30, 32) sont les plus éloignées l'une de l'autre, et une deuxième position dans laquelle le volet (28) est de forme générale galbée, et dans laquelle ses deux extrémités (30, 32) sont les plus rapprochées l'une de l'autre,
- des moyens d'actionnement (50) du déplacement d'au moins une extrémité (30, 32) par rapport à l'autre générant une force de déplacement, les moyens d'actionnement (50) étant agencés de sorte que la force de déplacement est appliquée sur chaque extrémité déplacée (30, 32) et de sorte que le déplacement de chaque extrémité déplacée (30, 32) entraîne la déformation du volet (28) entre sa forme plane et sa forme galbée, **caracterisé en ce qu'**il comprend aussi :
- des moyens de couplage (56) entre le déplacement de chaque extrémité déplacée (30, 32) et la rotation du volet (28), les moyens de couplage (56) étant agencés de sorte que le déplacement de chaque extrémité déplacée (30, 32) entraine la rotation du volet (28).

2. Dispositif (14) selon la revendication 1, comprenant des moyens de couplage (56) entre le déplacement de chaque extrémité déplacée (30, 32) et la rotation du volet (28), les moyens de couplage (56) étant agencés de sorte que le déplacement en rotation du volet (28) entraine le déplacement, notamment le déplacement en translation, de chaque extrémité déplacée (30, 32).

3. Dispositif (14) selon l'une quelconque des revendications 1 et 2, dans lequel les moyens de couplage (56) comprennent un palier (58) de guidage hélicoïdal de chaque extrémité déplacée (30, 32) du volet (28).

4. Dispositif (14) selon l'une quelconque des revendications précédentes, dans lequel chaque extrémité (30, 32) est montée articulée autour d'un axe commun (X) et le volet (28) est mobile en rotation autour de l'axe commun (X).

5. Dispositif (14) selon la revendication 4, dans lequel les moyens d'actionnement (50) comprennent des moyens de poussée de chaque extrémité déplacée (30, 32) vers l'autre extrémité (30, 32) le long de l'axe commun (X).

6. Dispositif (14) selon la revendication 4, dans lequel les moyens d'actionnement (50) comprennent des moyens de traction de chaque extrémité déplacée (30, 32) vers l'autre extrémité (30, 32) le long de l'axe commun (X).

7. Dispositif (14) selon la revendication précédente, dans lequel les moyens d'actionnement (50) comprennent au moins une fibre électro-active (54).

8. Dispositif (14) selon l'une des revendications 1 à 7, dans lequel le flux d'air circule à travers une ouverture (26) ménagée dans une pièce de carrosserie d'un véhicule automobile.

9. Dispositif (14) selon l'une des revendications 1 à 8, dans lequel la première position correspond à une position de dégagement de l'ouverture (26) et la deuxième position correspond à une position d'obturation de l'ouverture (26).

10. Dispositif (14) selon l'une des revendications 1 à 9, dans lequel le volet (28) forme un déflecteur ou un spoiler.

## Patentansprüche

1. Vorrichtung (14) zur Regulierung eines Luftstroms, wobei die Vorrichtung Folgendes umfasst:
- mindestens eine Klappe (28), die mit zwei Enden (30, 32), die relativ zueinander beweglich sind, versehen ist, wobei die Klappe (28) zwischen einer ersten Position, in der die Klappe (28) eine im Allgemeinen ebene Form hat und in der ihre beiden Enden (30, 32) am weitesten voneinander entfernt sind, und einer zweiten Position, in der die Klappe (28) eine im Allgemeinen gewölbte Form hat und in der ihre beiden Enden (30, 32) einander am nächsten sind, verformbar ist,
- Betätigungsmittel (50) zum Verlagern mindestens eines Endes (30, 32) in Bezug zum anderen, wobei eine Verlagerungskraft erzeugt wird, wobei die Betätigungsmittel (50) derart angeordnet sind, dass immer die Verlagerungskraft an jedes verlagertes Ende (30, 32) angelegt wird und dass die Verlagerung jedes verlagerten Endes (30, 32) zur Verformung der Klappe (28) zwischen ihrer ebenen und ihrer gewölbten Form führt,
**dadurch gekennzeichnet, dass** sie ferner Folgendes umfasst:
- Mittel (56) zur Kopplung zwischen der Verlagerung jedes verlagerten Endes (30, 32) und der Drehung der Klappe (28), wobei die Kopplungsmittel (56) derart angeordnet sind, dass die Verlagerung jedes verlagerten Endes (30, 32) zur Drehung der Klappe (28) führt.

2. Vorrichtung (14) nach Anspruch 1, umfassend Mittel (56) zur Kopplung zwischen der Verlagerung jedes verlagerten Endes (30, 32) und der Drehung der Klappe (28), wobei die Kopplungsmittel (56) derart angeordnet sind, dass die Drehverlagerung der Klappe (28) zur Verlagerung, insbesondere in Translation, jedes verlagerten Endes (30, 32) führt.

3. Vorrichtung (14) nach einem der Ansprüche 1 und 2, bei der die Kopplungsmittel (56) ein spiralförmiges Führungslager (58) für jedes verlagertes Ende (30, 32) der Klappe (28) umfassen.

4. Vorrichtung (14) nach einem der vorhergehenden Ansprüche, bei der jedes Ende (30, 32) gelenkig um eine gemeinsame Achse (X) montiert und die Klappe (28) drehbeweglich um die gemeinsame Achse (X) ist.

5. Vorrichtung (14) nach Anspruch 4, bei der die Betätigungsmittel (50) Mittel zum Schieben jedes verlagerten Endes (30, 32) zu dem anderen Ende (30, 32) entlang der gemeinsamen Achse (X) umfassen.

6. Vorrichtung (14) nach Anspruch 4, bei der die Betätigungsmittel (50) Mittel zum Ziehen jedes verlagerten Endes (30, 32) zu dem anderen Ende (30, 32) entlang der gemeinsamen Achse (X) umfassen.

7. Vorrichtung (14) nach dem vorhergehenden Anspruch, bei dem die Betätigungsmittel (50) mindestens eine elektro-aktive Faser (54) umfassen.

8. Vorrichtung (14) nach einem der Ansprüche 1 bis 7, bei dem der Luftstrom durch eine Öffnung (26) strömt, die in einem Karosserieteil eines Kraftfahrzeugs ausgenommen ist.

9. Vorrichtung (14) nach einem der Ansprüche 1 bis 8, bei der die erste Position einer Position der Freigabe der Öffnung (26) und die zweite Position einer Position Verschlusses der Öffnung (26) entspricht.

10. Vorrichtung (14) nach einem der Ansprüche 1 bis 9, bei der die Klappe (28) ein lenkblech oder einen Spoiler bildet.

## Claims

1. Device (14) for regulating an air stream, the device comprising :
- at least one flap (28) equipped with two ends (30, 32) free to move with respect to each other, the flap (28) being deformable between a first position in which the flap (28) is generally flat and in which its two ends (30, 32) are the farthest away from each other, and a second position in which the flap (28) is generally curved and in which its two ends (30, 32) are closest to each other,
- actuation means (50) for actuating the displacement of at least one end (30, 32) with respect to the other generating a displacement force, the actuation means (50) being designed so that the displacement force is applied on each end displaced (30, 32) and so that the displacement of each end displaced (30, 32) results in the deformation of the flap (28) between its flat shape and its curved shape, **characterised in that** it also comprises :
- coupling means (56) between the displacement of each end displaced (30, 32) and the rotation of the flap (28), the coupling means (56) being designed so that the displacement of each end displaced (30, 32) results in the rotation of the flap (28).

2. Device (14) according to claim 1, comprising coupling means (56) between the displacement of each end displaced (30, 32) and the rotation of the flap (28), the coupling means (56) being designed so that the rotational displacement of the flap (28) results in the displacement, in particular the translational displacement, of each end displaced (30, 32).

3. Device (14) according to any of claims 1 and 2, wherein the coupling means (56) comprise a helicoidal guide bearing (58) to guide each end displaced (30, 32) of the flap (28).

4. Device (14) according to any of the preceding claims, wherein each end (30, 32) is installed hinged around a common axis (X) and the flap (28) is free to rotate around the common axis (X).

5. Device (14) according to claim 4, wherein the actuation means (50) comprise means for pushing each end displaced (30, 32) towards the other end (30, 32) along the common axis (X).

6. Device (14) according to claim 4, wherein the actuation means (50) comprise means for pulling each end displaced (30, 32) towards the other end (30, 32) along the common axis (X).

7. Device (14) according to the preceding claim, wherein the actuation means (50) comprise at least one electro-active fibre (54).

8. Device (14) according to one of claims 1 to 7, wherein the air stream flows through an opening (26) formed in a body part of a motor vehicle.

9. Device (14) according to one of claims 1 to 8, wherein the first position corresponds to a position where the opening (26) is unblocked and the second position corresponds to a position where the opening (26) is blocked.

10. Device (14) according to one of claims 1 to 9, wherein the flap (28) forms a deflector or a spoiler.
